# EUROPEAN PATENT SPECIFICATION

(11) **EP 1 180 182 B1**
(45) Date of publication and mention of the grant of the patent: **09.05.2007**
(21) Application number: 00929325.9
(22) Date of filing: 26.05.2000
(51) Int. Cl.: E04B 1/80

(54) **MINERAL FIBRE INSULATING BOARD COMPRISING A RIGID SURFACE LAYER, A PROCESS FOR THE PREPARATION THEREOF AND A USE OF THE INSULATING PRODUCT FOR ROOFING AND FACADE COVERING**
MINERALFASERDÄMMPLATTE MIT EINER STEIFEN AUSSENSCHICHT, EIN HERSTELLUNGSVERFAHREN UND VERWENDUNG DES WÄRMEDÄMMPRODUKTS FÜR DACH- UND FASSADENBEKLEIDUNG
PANNEAU ISOLANT EN FIBRES MINERALES COMPRENANT UNE COUCHE SUPERFICIELLE RIGIDE, PROCEDE DE PREPARATION DUDIT PANNEAU ISOLANT, ET UTILISATION D'UN ARTICLE ISOLANT POUR TOITURE ET FACADE

(30) Priority: 27.05.1999 DK 75199
(43) Date of publication of application: 20.02.2002
(73) Proprietor: Rockwool International A/S, 2640 Hedehusene (DK)
(72) Inventor: MERES, Oskar, DK-2600 Glostrup (DK)
(74) Representative: Samuels, Lucy Alice
(86) International application number: PCT/DK2000/000282
(87) International publication number: WO 2000/073600

(56) References cited:
- EP-A2- 0 947 637
- DK-B- 148 121
- DK-B- 160 139
- SE-B- 416 719
- US-A- 3 590 540
- US-A- 4 175 149
- US-A- 4 950 355

## Description

The present invention relates to a mineral fibre insulating product comprising a mineral fibre insulating layer and at least one rigid surface layer, said surface layer comprising inorganic mineral material bound together by a binding agent.

In modern roof and facade constructions it is common to employ mineral fibre insulating products comprising an insulation layer and a rigid surface coating or layer on at least the one main surface of the product eventually facing the exterior of the insulated construction.

Mineral fibre insulating products are typically highly porous, relatively soft and compressible webs or boards, and therefore a coating or top layer is often necessary to enable and/or facilitate the further cladding or coating of the insulated structure with e.g. roofing felt, bitumen, plaster, paint and/or to provide increased strength or weather resistance to the insulating product itself.

One of the problems often addressed in the past with regard to such products used as roofing boards is the amount of bitumen absorbed by the board when bitumen is used as adhesive for roofing felt applied on top of the board and/or to seal the top surface of the board in order to prevent moist use from entering the insulating material and eventually penetrating the roof.

This problem has been attempted solved by inter alia trying to provide an essentially closed and pore-less top layer on the insulation layer e.g. by means of compositions based on applying mixtures of various inorganic compounds and one or more inorganic binding agents suspended in considerable amounts of water to the product and drying and setting said binding agent.

A process for providing such layer on a mineral fibre board is taught in SE-416 719 whereby the top surface of a mineral fibre insulation layer is impregnated with an aqueous composition based on water glass and clays and/or talc. The composition is after the application thereof dried to irreversibly form a rigid closed layer integrated with the mineral fibre insulation layer.

A similar method is disclosed in DK-B-160 139 wherein a mineral fibre product having a closed top surface layer is formed by coating an insulating material layer with a composition based on a silica sol-gel. The aqueous sol-gel comprising further fillers is applied to the top of a mineral fibre web having a thermo-curable resin as binder, and the product is dried at 200 °C to remove water from the sol-gel. A further method of this kind is disclosed in DE-Al-4 212 842.

Although the said type of methods to some extent lead to products which absorb less bitumen and, furthermore, add to the strength of the obtained products, they are in general inconvenient as they employ very time, space and/or energy consuming drying steps in order to remove excess water from the product during the production. It is therefore difficult and costly to apply these techniques in a continuous online production, which otherwise in general is sought.

Furthermore, the rigid layers of the above obtained products are relatively, brittle, which is highly undesirable when the products are to be used in e.g. roof constructions directly under the roofing felt and where the roof eventually should allow for traffic thereon.

Even further, these products are for some purposes insufficiently water resistant in terms of the rigid layer being at least partly soluble. Most of these products are at some time during their life cycle subjected to water or moist use, which depending on the specific circumstances eventually might deteriorate or seriously impair the rigid layer of the product.

Another drawback of these prior art products is that the rigid surface coating has a tendency to shrink during the setting of the rigid surface material, which might lead to uneven products.

Another approach is disclosed in DK-B-148 121 where a mineral fibre insulating product comprising a layer of mineral wool is provided with a glass non-woven fabric on at least one of its main surfaces. The glass non-woven fabric comprising 15-20 weight-% of an organic thermo curable binding agent is applied on a mineral fibre web also comprising a thermo curable resin as binding agent and the binding agent is simultaneously cured in both constituents to bond the final product together.

However, the final insulating product obtained by this method exhibits a poor strength compared to the previously discussed products. A high point strength in the top surface of roof insulating boards is as mentioned generally desirable in order to allow for at least light traffic on the roof and in order to improve handleability. Furthermore, said board does not significantly improve the properties regarding absorption of e.g. bitumen.

In the art of roofing it is common during the procedure to torch the roofing felt using a flame which soften the adhesive, typically in the form of a bitumen product applied on the backside of the roofing felt and/or directly on the roofing insulating board, and thereby creating the adhesion between the felt and the insulating material. However, the temperatures created by the torching process may decompose the organic binding agent in the top layer of the above mentioned insulating material leading to poor physical properties of the material as well as poor adhesion between the roofing felt and the underlying insulation.

US-A-1 275 957 discloses yet another method of producing a mineral fibre board for roofing purposes and comprising a rigid stratum at one surface. The stratum is formed by admixing strands of glass directly to the mineral fibres making up the said surface during the production of the insulating layer itself. The surface layer is after a compression and setting of the board impregnated with asphalt. Unfortunately, the relatively porous nature of the product surface requires significant amounts of asphalt to provide the desired adhesive properties.

Furthermore, in a warm environment the asphalt of such boards has a tendency to soften and get tacky which makes the handling, cutting and/or (un-)packing of the boards troublesome and generally the adhesive force of the asphalt is dependent on the temperature which for some purposes is undesirable.

Even further, the application of asphalt is limiting to the potential use of the boards to places and applications where the presence of asphalt is acceptable. From an environmental point of view asphalt products might not be acceptable and they are highly undesirable for used where there is a fire risk.

It is also known in the art of mineral fibre products to produce layered products by superposing a number of more or less separately produced mineral fibre web layers having different densities.

Such methods are generally designated dual-density (DD) methods and are known from e.g. WO 88/00265 wherein a mineral fibre web comprising a curable binding agent is divided, wherein one divided off part is compressed inducing a substantial sustained density increase thereto, whereafter the parts are superposed and rejoined by curing the binding agent within the product. It is stated in WO 88/00265 that density of the compressed part may be 20 to 600 kg/m³.

Alternative ways to obtain layered mineral fibre insulating products of this or similar kind are also known from e.g. DK 155 163, where a newly formed continuous and longitudinal extending primary mineral fibre web is compressed in a track along one side before the primary web is laid out in the transverse direction partly overlapping itself in slightly displaced loops to form a secondary web having essentially two layers of different densities.

Although excellent products may be produced by the last mentioned methods, there is a limit to how rigid and strong a surface layer can be produced by these methods. Furthermore, the high density layer produced by the last mentioned method is somewhat uneven in thickness.

For the purposes of roofing the said products unfortunately also exhibits poor adhesion properties and the said boards do also not significantly improve the properties regarding absorption of e.g. bitumen.

It has also been found that the torching procedure for fixation of roofing felt on the top of this kind of insulating products might as disclosed above lead to decomposition of organic binding agent in the top surface of the product impairing the product properties and the desired adhesion between the insulating material and the applied felt.

Furthermore, the compressed layer according to the said methods will still be relatively porous compared to the corresponding layers obtainable by the previously discussed methods, and thus still not suitable for adhesion in terms of requiring too much adhesive.

Finally, virtually none of the prior art insulating products provides a top surface sufficiently coherent and suitable for the application of self-sticking foils or membranes thereon, i.e. such sheet formed members having a relatively thin layer of an adhesive on the backside does not adhered sufficiently strong to the insulating product per se.

Accordingly, there remains a need for a mineral fibre insulating product of the above mentioned kind which does not exhibit the above identified drawbacks.

In a first aspect the present invention relates to the preparation of dual-density mineral fibre products, as the method according to the invention results in a mineral fiber product comprising two or more layers of different densities. In a second aspect the invention relates to the preparation of a specific type of dual-density mineral fibre products In this second aspect the mineral fibre insulating base layer according to the invention may be provided as a dual-density layer comprises sub-layers of different densities.

Such a product is provided according to the invention. In the first aspect of the invention the base layer and the surface layer may in principle have any desired densities. Besides the choice of densities the method of the first aspect may be carried out similar as the method of the second aspect. In the following the invention is therefore described with references to the second aspect only.

The product according to the second aspect of the invention comprises a mineral fibre insulating layer and at least one rigid surface layer, said surface layer comprising mineral material bound together by a binding agent wherein said insulating layer comprising mineral fibres and a binding agent has a mean density of 50-300 kg/m³ and wherein said rigid surface layer comprising an mineral material and an organic binding agent has a mean density of at least 300 kg/m³, preferably at least 450 kg/m³.

By providing a rigid surface layer of the above defined kind combined with a mineral fibre insulating layer it has proven possible to obtain an excellent insulating product suitable for all the above mentioned purposes and without the mentioned drawbacks of the various prior art products. In essence the product according to the invention provides insulating properties essentially as good as provided by the insulating layer itself, as well as a rigid surface of high strength capable of withstanding rough treatment and tough weather conditions. Furthermore the rigid surface has sufficient strength to allow persons to walk on the surface without causing any damage or significant deformation of the insulation product.

At the same time the product according to the invention is sufficiently dense and uniform to allow for adhesion of e.g. roofing felt or other items directly thereto. This is obtainable by using even very low amounts of adhesive, and the product is particularly suitable for the application of self-sticking foils or the like.

Moreover the process for the manufacture of the insulation product according to the invention has the following advantages. It is possible to apply the rigid surface layer more precisely than with the known techniques and it is possible to apply a layer, which is also thinner. The variation of the density of the layer can be minimized to +/- 5 % and the variation of the thickness of the layer can be minimized to +/- 0,5 mm. The application of dry bulk material with a dry powder binder minimizes the risk of wet spots. Wet spots are a major problem in connection with e.g. façade products. The dry process furthermore has the advantage that no evaporation of water is required. This results in increased capacity of the curing- or hardening oven. The application of the rigid surface layer is independent of the spinning machines, which results in increased capacity of the plant. The rigid surface layer may be constituted by mineral fibre waste, and thereby the present invention also solves a waste problem.

By applying an organic binder to a composition comprising significant amounts of one or more mineral materials allowing for a tight packing of the material, it has surprisingly proven possible to produce very dense and strong surface layers for mineral fibre insulating products, even if these layers are produced very thin.

According to the invention the advantages are obtainable for layers as thin as 0.5 mm in average and ranging up to any practically applicable thickness, e.g. of around 40 - 50 mm. A preferred thickness for the above mentioned applications ranges from around 1 - 6 mm, preferably 1 - 4 mm and more preferably around 2, 3 or 4 mm.

The advantageous strength properties are thought to be at least partly due to the fact that organic binding agents tend to create a less brittle bonding between the constituents than the prior art inorganic binders such as geo-polymers, silica based binders and colloid phosphoric acid based binders.

It is a further surprising advantage of the product according to the invention that the organic binding agent in the rigid surface layer appears not to decompose when roofing felt is torched to the product in the conventional way. This is thought to be at least partly due to the high density of the rigid layer. It seems that the dense layer has a high heat capacity leading to the ability to receive much heat before reaching any critical decomposition temperature for the binding agent.

Therefore, the insulation product has appeared to have an excellent thermal stability.

It is, furthermore, believed that the high density and/or the composition of the layer to some extent allows for a greater heat conduction/distribution within the layer itself, which again helps preventing overheating. This is even possible even without impairing tne insulating properties of the integrated insulating layer.

The rigid surface layer of the product according to the invention also exhibit the advantages of being essentially insoluble in water after curing or hardening as well as being thermally stable; both properties being beneficial for a wide variety of applications of the product.

In principle any organic binding agent is applicable also counting thermoplastic binders. However, preferable organic binders according to the invention are heat curable binders such as phenol, polyester, epoxy, PVAc (polyvinyl acetate), PVAl (polyvinyl alcohol), acrylic, acid anhydride/amine based binders. It is particularly preferred to use phenol based binders such as phenol formaldehyde, urea and/or melamine resins and/or acid anhydride/amine resins or a furan resin as described in the published international patent application WO 99/38372.

It has surprisingly proven particularly advantageous to at least partly use the same binder for the rigid layer as is used in the mineral fibre insulating base layer. Apart from being simpler from a practical, point of view to handle only a limited number of different binders and the means for applying and curing them, it furthermore, seems to improve delamination strength between the layers.

The said binders are according to the invention present in the rigid surface layer in an amount of 5-35 weight-%, more preferably 5-20 weight-%, and even more preferably around 8-15 weight-%.

According to an embodiment of the invention two different binders are used. It has surprisingly proven possible to improve the UV. stability of the rigid layer significantly by using around 50 weight-% phenol based binder together with around 50 weight-% polyester based binder.

However, in the past it has been believed that using significant amounts of organic binder material in insulation products would impair the product by making it too inflammable, cf. NO 140 296. Nevertheless, the dense composition of the rigid layer according to the invention has proven to be surprisingly non-inflammable.

Furthermore, due to the high strength of the rigid layer, it is possible to reduce the thickness of the layer, thus resulting in an overall low amount of organic binding agent.

The improved strength of the rigid layer, adding significantly to the overall dimensional stability of the entire product, even allows for a lighter bonding of the mineral fibre insulating base layer thereby reducing the overall need for organic binder even further.

Alternatively and/or additionally, the high strength of the rigid surface layer allows for a lower average density of the underlying insulating material, which reduces the need for raw materials as well as improves the insulating properties without impairing the physical strength of the product as a whole.

The high strength is also believed to be at least partly due to the use of mineral material of high bulk density in the composition. It has surprisingly been found that such material allows for a compact and dense packing of the rigid layer composition which together with the use of organic binding agent appears to lead to a significantly higher strength than provided by e.g. the mere compressed fibre layers of the prior art as well as the inorganically bound layers.

The rigid surface layer of the product according to the invention has a density, 450 kg/m³, more preferably over around 600 kg/m³ and even more preferably over around 700 kg/m³. For practical purposes it has proven advantageous for the rigid surface layer to have a density in the range of around 450-1800 kg/m³, e.g. in the range 700-1800 kg/m³.

Furthermore, as the rigid surface layer according to the invention is more dense and strong, it is also more dimensionally stable, homogenous and even, which efficiently reduces the amount of adhesive or paint necessary to cover the surface sufficiently. As the rigid surface layer is very cohesive it also provides excellent basis for adhesion thereto.

Any grained mineral material and/or combinations of mineral materials which essentially provide for the above defined properties of the rigid layer can be used according to the invention. It has, however, proven particularly suitable to use a significant amount of material having an average grain size or length between around 3 mm and 50 µm depending on the other qualities of the material and the other constituents.

The mineral materials applicable according to the invention typically fall into one of four categories having different properties, and they may be natural as well as man-made. The amount of material from each of the categories can be selected according to the desired properties of the rigid surface layer.

The bulk material for the rigid surface layer may also be a mixture of glass and stone material. Furthermore the bulk material may comprise glass fibers with a length up to 100 mm.

According to the invention it is preferred to select one or more constituents from the category of so called hard mineral materials, comprising materials such as quartz sand, olivine sand and the like. These minerals preferably have a hardness of around 6-9 Mohr. When the rigid surface layer comprises an amount of hard mineral materials it has proven to provide high hardness of the layer as well as great durability.

According to the invention it is also or alternatively preferred to select one or more constituents from the category of so called soft mineral materials, comprising materials such as talc, graphite, mica, dolomite, lime stone and the like. These minerals preferably have a hardness of around 1-6 Mohr. The addition of an amount of soft mineral materials in the rigid surface layer i.a. facilitates the cutting of the final product. According to one embodiment of the invention an average hardness of around 3-4 Mohr has proven particularly expedient.

It is for some purposes also or alternatively preferred to select one or more constituents from the category of so called absorbing mineral materials, comprising materials such as diatomaceous earth, zeolites and the like. These minerals can be added in order to improve the rigid surface layers ability to retain substances applied thereto and to improve adhesion.

Furthermore, it is in some embodiments of the invention preferred to employ an amount of ultra high density minerals, such as magnesit. These minerals can be used to compensate for other lighter constituents in the rigid surface layer composition and/or to improve the sonic damping of the final product.

It is particularly preferred to employ a significant amount of mineral material selected from the categories hard and/or the soft minerals, preferably around 40-97 weight-% of the composition.

According to one embodiment of the invention, it is particularly preferable, that the inorganic mineral particles used according to the invention are substantially of the same composition as the mineral fibres in the mineral fibre base layer. This has proven to provide excellent strength of the rigid layer, high delamination strength and a particularly advantageous process for the production of the products.

In the art of mineral fibre production it is common that an amount of waste products are formed during the production process. Such waste products can be shots or otherwise not correctly fiberized mineral materials, which are removed during the process. It can also be flawed products, in case an error occurs during the production. It has proven particularly advantageous to use such milled waste products as raw material for the rigid surface layers according to the invention. Firstly the mineral material has an ideal composition for the purpose and it, furthermore, solves the problem of the otherwise necessary traditional disposal of the waste products, thereby saving energy as well as natural resources for the benefit of the environment.

The rigid layer according to the invention may also comprise an amount of fibrous material. It is believed that such material can have a significant impact on the strength of the layer, in particular the tensile strength. For that purpose the fibres used are preferably as long as possible, and preferably at least around 3 mm, more preferably at least 1 cm an even more preferably at least around 10 cm.

However, long fibres have a tendency to lower the density of the rigid surface layer which as indicated above can be highly undesirable, therefore it may be expedient according to some embodiments of the invention depending on the other constituents of the rigid surface layer to employ shorter fibres allowing for a more dense overall packing of the material.

The fibrous material used according to the invention may be completely or partly bound, woven and/or intermingled. It is, however, preferable to employ essentially free single fibres. The fibrous material according to the invention may be organic or inorganic, and may be natural or man-made.

According to one embodiment of the invention it is particularly preferred to at least partly use mineral fibres as fibrous material. In this case the mineral fibres used may advantageously have essentially the same composition as the mineral fibre insulating layer of the product. This has proven to be expedient i.a. because such fibres are readily at hand from the insulating layer production.

Unless the mineral fibres used in the composition of the rigid surface layer per se has a size distribution and/or composition which gives a bulk density of the fibres within the desired density range of the rigid surface layer, it is preferable to use less than 15 weight-% mineral fibres. In order to provide mineral fibre material with a higher bulk density, such material can be ground or milled to a fibre length of e.g. below 50 mm or below 150 µm as described later on. The bulk material is to be understood as substantially non-compressed mineral and/or fibrous material.

It has for some purposes proven advantageous also or alternatively to introduce other types of fibres into the rigid layer such as natural or synthetic more or less organic fibres. Applicable organic fibres comprises carbon fibres, cellulose fibres or the like. Due to the often low bulk density of organic fibres it is in general preferred to use no more than 5 weight-% organic fibres in the composition of the rigid surface layer.

According to the invention the rigid layer may also comprise one or more fillers and/or additives. Applicable fillers and additives comprise clays, lime, magnesium hydroxide, coloring agents and the like.

A further advantage of the mineral fibre product according to the invention is that the rigid surface layer is open to diffusion. This has proven highly advantageous where the product is used for roofing and where the rigid surface is clad with roofing felt in the traditional manner. This advantage is due to the unfortunate fact that the roofing felt traditionally applied on top of products of the present kind in many cases is not completely sealed during mounting, or it becomes damaged over the years, whereby rainwater or moisture can bypass the felt and become stuck under the felt. When subjected to sunlight the felt warms up and the water which has become stuck beneath the felt evaporates and expands significantly forcing the felt to cockle or bulge which might even lead to further more serious leaks. As the mineral fibre insulating products according to the invention comprises a rigid surface layer open to diffusion any water penetrating the felt will diffuse and distribute itself, and when evaporating escape through any available channels.

According to a preferred embodiment of the mineral fibre insulating product according to the invention the rigid surface layer is provided with a surface coating in terms of a woven or non-woven textile, preferably a non-woven fleece. This has proven to add significantly to the tensile strength of the layer as well as reducing the amount of dust which otherwise might be released from the product depending on its composition.

Preferred textiles include polyester, glass, paper, carbon, nylon, which can be either flexible or rigid depending on the desired characteristics. Such textiles can also be provided under and/or within the rigid surface layer.

Furthermore, the particular choice of textile can be used to determine the properties of the surface such as surface tension, smoothness, color and the like. Due to the advantageous dimensional properties of the rigid surface layer itself, these textiles can be made relatively thin.

In case of a relatively rigid textile such as a glass fleece it is preferred to employ a textile having a surface weight of around 100-30 g/m², more preferably around 80-40 g/m² and even more preferably around 40-60 g/m².

For more elastic materials it is preferred to use textiles as thin as possible. According to a preferred embodiment of the invention the textile has a surface weight of less than around 100 g/m², preferably less than around 60 g/m², more preferably less than 30 g/m² and even more preferably around less than 15 g/m².

For some purposes it can be advantageous to provide more than one surface of the mineral fibre insulating product according to the invention with a rigid surface layer. According to one embodiment two or more, preferably at least the two main surfaces are provided with the rigid surface layer according to the invention. According to another embodiment; all surfaces are provided with the layer.

According to preferred embodiments of the mineral fibre products according to the invention, the product may comprise more than one mineral fibre insulating layer. The insulating layers preferably have different densities and/or fibre orientation.

A particularly preferred embodiment of the mineral fibre insulating product according to the invention comprises a first mineral fibre insulating layer having a density of around 50-150 kg/m³, preferably around 70-130 kg/m³, a second mineral fibre insulating layer having a density of around 150-300 kg/m³, preferably around 160-250 kg/m³ and a rigid surface layer as prescribed.

In case the product comprises an insulating base layer which comprises two or more insulating layers having different densities, it is preferred to have the insulating layer with the highest density neighboring the rigid surface layer. By providing a insulating layer of a relatively high density under the rigid surface layer it is possible to obtain very even and planar surfaces, even using very little material for the rigid surface layer.

Providing an insulating layer of a relatively high density under the rigid surface layer has also surprisingly proven to increase the tensile strength of the product significantly. The combined effect of the high-density insulating layer and the rigid surface layer can even be obtained using very little material in both layers. The thickness of the high density insulating layer is preferably as low as possible, but advantageously 5-40 mm, and even more preferably 10-15 mm.

The product according to the invention can be shaped in any way known in the art of mineral fibre insulating materials, however, the product is preferably in the form of a substantially rectangular board having the rigid surface layer provided substantially at least one of the main surfaces, i.e. one of the two largest.

The product according to the invention is suitable for essentially any heat, sound or fire insulating purposes known in the art of mineral fibre technology. In particular the product is suitable for the purpose of roofing and facade cladding. Furthermore, as the rigid surface layer according to the invention is essentially undissolvable in water the product is also suitable for use in a marine environment.

The invention further relates to the preferred use of the insulating product. When used as roofing material bitumen or similar material may be applied onto the rigid surface. When used as facade covering, plastering mortar or similar material may be applied onto the rigid surface. In both uses the rigid surface layer may be pretreated with a primer such as PVAC prior to the application of bitumen or mortar.

The significantly increased dimensional stability of the product according to the invention provided by the rigid surface layer greatly increases the handleability of the product as well as the packing ability thereof. It, furthermore, reduces the amount of transport-damaged products compared to the more fragile prior art products.

The present invention also relates to a process for the manufacture of an improved mineral fibre insulating product comprising an insulating layer and a rigid layer at at least one surface.

Process for the manufacture of an insulating product comprising a mineral fibre based insulating base layer and a rigid surface layer, said process comprising the steps of
a) providing an insulating base layer having an average density of 50-300 kg/m³,
b) providing a bulk surface layer material with an average bulk density of at least 300 kg/m³, preferably 450 kg/m³ and comprising a substantially homogenous mixture of at least one mineral material and an organic binding agent,
c) distributing the bulk surface layer material on at least one surface of the mineral fibre insulating base layer,
d) curing or hardening the organic binding agent within the bulk surface layer material to form a rigid surface layer.

Although it is generally desirable to apply as little water as possible in order to save the energy and/or time it takes to remove it, it has surprisingly been found that the strength of the rigid surface layer can be improved significantly by applying up to around 30 weight-%, preferably 10 weight-% water in the bulk surface layer material before setting the binding agent. Preferably an amount of 0.5-8 weight-% and even more preferably around 1-5 weight-% water is added to the material.

Furthermore, it has in particular proven advantageous to dissolve or disperse at least part of the binding agent in the water before applying it to the bulk composition. According to one preferred embodiment of the process according to the invention as much as possible of the binding agent is suspended in the water, however, it has proven expedient to use suspensions having a binder content of no more than around 60 weight-%. Preferably the suspension has a binder content of around 20-60 weight-%.

According to another preferred embodiment of the invention it is preferred to mix around 50-100 weight-% of the binding agent to the bulk material in a substantially dry pulverous form and supply the remaining part of the binding agent as an aqueous suspension immediately prior to or substantially at the same time, or less than 10 minutes before or after, preferably less than 5 minutes before or after the bulk surface layer material is distributed onto the surface of the insulating layer. This has i.a. proven to significantly increase the delamination strength between the insulating layer and the rigid surface layer.

The term describing the binder to be in substantially dry pulverous form or an essentially dry powder, means that the binder is pulverous and contains less than 10 weight-% of water, preferably less than 5 weight-% of water and more preferably less than 2 weight-% of water.

A further advantage of applying some water or other liquid to the bulk surface layer material is that it greatly reduces the amount of dust released from the material until the binding agent in the material eventually is set and the rigid layer thereby formed.

A similar dust reducing effect can also be achieved according to the invention by using an amount of other liquids, preferably mineral/silicone oils, which can be supplied in an amount of 0-3 weight-%, preferably 0.1-1 weight-% and more preferably 0.2-0.6 weight-%. Such oils can also be employed in order, to increase the rigid surface layers hydrofobic properties or for other purposes. The hydrofobic properties can also be controlled by adding a corresponding amount of silicone resin or the like to the bulk surface material.

The mineral material used in the bulk surface material is present in an amount of at least 40 weight-%, preferred in an amount of 40-95 weight-%, more preferably in an amount of 50-95 weight-% and even more preferably in an amount of 80-92 weight-%.

The mineral material used in the bulk surface material preferably comprises one or more constituents selected from the previously discussed groups of hard, soft, absorbing and ultra high density minerals. The minerals are preferably essentially inorganic.

Before the application of the bulk surface layer material onto the surface of the insulating layer the non-hardened bulk material should have a density of at least 150 kg/m³. The optimal density of the non-hardened bulk material depends largely on the composition of the bulk material. The more fiber material included in the bulk material, the lower may the density of the non-hardened bulk material be. In general it is preferred that the density of the non-hardened bulk material is sufficient high to result in a bulk density of at least 350 kg/m³, more preferred around 450 kg/m³, more preferably around at least 600 kg/m³ and even more preferably around at least 700 kg/m³. The difference in the density of the bulk material before distributing it on the base layer and after curing or hardening may be up to 50%.

The high density provided by mineral material used in the bulk surface material can be obtained by using material which per se has a high bulk density such as the particularly preferred material according to the invention, namely quartz sand. However, according to another particularly preferred embodiment of the invention the high density of the bulk surface layer material is obtained by using milled mineral fibre material having a high bulk density.

As mentioned it is common in the art of mineral fibre production that an amount of waste products are formed during the production process. Such waste products can be shots or otherwise not correctly fiberized mineral materials, which are removed during the process. It can also be flawed products, in case an error occurs during the production. It has proven particularly advantageous to mill such waste products as raw material for the rigid surface layers according to the invention. Firstly the mineral material has an ideal composition for the purpose and it, furthermore, solves the problem of the otherwise necessary traditional disposal of the waste.

In the case of using mineral fibre material as a major part of or the only mineral raw material for the bulk surface layer material it is preferred to mill it to an average fibre length less than around 50 mm and/or a bulk density of around 250-400 kg/m³ and for some purposes preferably a bulk density around 700-900 kg/m³. More preferably the fibres are milled to an average fibre length less than around 800 µm, preferred less than around 200 µm and preferably less than around 100 µm, and even more preferably less than 80 µm. When such mineral fibrous material is used as a main constituent of the bulk surface layer material, it can still be expedient to apply other fibrous material having the properties as disclosed above and in the stated amounts.

Any known mill type capable of obtaining the desired properties can be used. However, milling or grinding disc mills such as Fas® mill, hammer mills and rod mills have proven to be particularly efficient. Other raw materials of inorganic mineral material can similarly be milled to obtain a suitable grain size as well as bulk density.

For mixing any pulverous binding agent, mineral material and any further constituents to obtain the bulk surface layer material any known means for mixing essentially dry particulate material of high bulk density can be used. However, by the use of some means of mixing, the bulk surface layer material has a tendency to cake, which is highly undesirable in particular when thin rigid layers are to be produced. It has thus been found that a substantially horizontal rotating culvert drum or other similar means providing low shear force while mixing and conveying the composition preferably continuously are particularly suitable according to the invention. It is in general believed that the mixing should be performed well below the setting temperature of the binding agent. This can of course also be obtained by means of active cooling.

For an even distribution of the bulk surface layer material onto the surface of the insulating layer it is preferable to first feed the material to a box feeder which supplies it onto a first conveyor belt and on which it optionally is evened out using rollers, brushes and/or the like. Beneath said first conveyor belt a second conveyor belt transports the insulating layer and the bulk surface layer material is dropped from the first conveyor belt onto the top surface of the insulating layer on the second conveyor belt, which then feeds the coated insulating material to the curing oven.

However, in principle any means capable of distributing a substance similar to the bulk surface layer material in an even manner can be used according to the invention. It is particularly preferred to use feeding and/or distribution means comprising steering aggregates which enables a continuous and homogenous flow of material onto the insulating layer.

It has according to an embodiment of the invention proven particularly expedient to straighten out or smoothen the top surface of the insulating layer before the application of the bulk surface layer material eventually forming the rigid surface layer. This has been found to lead to more even rigid surface layers.

Such conditioning can be performed using rollers, bands or the like. The top surface of the bulk surface layer material can also advantageously be conditioned after the application thereof onto the insulating layer by means of brushes, rollers bands or the like to ensure an even distribution of the material.

In case it is preferred to have the rigid surface layer on the bottom surface of the insulating layer, it is possible to feed the insulating layer onto a conveyor already being covered by a substantially uniform layer of bulk surface layer material. It is also possible to obtain rigid surface layers at both the top and bottom surface by doing both and otherwise proceed as disclosed above.

The mineral fibre insulating base layer according to the invention can be a single or multi density mineral fibre web, i.e. 1 layer of more or less homogenous density or 2 or more layers of different densities, the web having a mean density of 50-300 kg/m³.

In case of a single density mineral fibre insulating base layer, it is preferable that the layer has a density of around 50-200 kg/m³, more preferable around 100-150 kg/m³.

However, according to the invention it is particularly preferable to use mineral fibre webs having a high density layer facing the rigid surface layer, said high density layer having a density of 150 - 300 kg/m³, preferably 160 - 250 kg/m³ and even more preferably around 180 - 220 kg/m³.

The insulating base layer used according to the present invention can be provided in any known manner preferably as disclosed in EP 0 555 334. In case of a dual or multi density insulating layer, it is preferably obtained essentially as disclosed in DK 155 163 or PCT/DK99/00152.

According to the present invention it is particularly preferable to apply the bulk surface layer material onto the insulating layer prior to the curing of any curable binding agent within the insulating layer. In this way the binder in all layers is cured at substantially the same time thus saving energy, equipment and process steps The difference in the time of curing of the binders in all layers should be less than 10 minutes, preferably less than 5 minutes. A particularly preferred way to obtain these advantages according to the invention is to apply the bulk surface layer material onto the top surface of the mineral fibre web produced according to e.g. one of the above mentioned methods substantially immediately prior to the web enters the curing oven for heat curing. It is however, possible to apply the bulk surface layer material on a pre-cured mineral fibre insulating layer, separately curing the bulk material and thereby obtain the product according to the invention.

As mentioned it is highly preferably to use a conventional curing oven known in the art of mineral fibre production and used for curing the binding agent in the insulating layer for also curing the binding agent in the rigid surface layer. However, such curing ovens typically exhibit a number of drawbacks.

Firstly, a traditional curing oven in the present art uses a conveyor band on both sides of the product to be cured in order to transport the product through a zone where hot air is blown through the product for the purpose of heat setting the binding agent. The typical conveyor band of a curing oven consists essentially of a number of rigid lamellas, which unfortunately leaves marks on the top and bottom surfaces of the cured product.

As it in general is desirable to obtain products having smooth surfaces, and in particular for products of the present kind, it is often necessary to cut or abrade the surfaces of products cured in conventional curing ovens.

However, it has surprisingly been found that by covering the product surface prior to the curing step with a porous textile having a certain stiffness and running the textile though the curing oven the tracks from the curing oven can be greatly reduced or even eliminated. A stiffness similar to the stiffness of a standard commercial glass fleece having a surface weight of around 40-60 g/m² or more has been found appropriate for most purposes, depending on the type of curing oven lamellas and the optional compression induced to the product during the curing step.

Any textile or the like having the required stiffness can be used for the mentioned purpose. However, the textile should preferably be porous in order to allow for the hot air to pass through it if necessary to obtain the curing. Similarly it is highly advantageous that that bulk surface layer material is porous enough to allow for the hot air to penetrate the layer.

According to the invention it is preferred to use either inorganic and/or organic textiles and both woven and non-woven textiles can be used. In particular glass non-woven fleece has proven to be advantageous, but also other stiff fleeces are efficient.

By the curing process the textile will in many cases become adhered to the product surface. This can be highly desirable if certain surface properties corresponding to the properties of the textile is required. In any event the application of a textile covering on in particular the rigid surface layer according to the invention has proven to even further improve the tensile strength thereof.

If it is preferred not to have the textile adhered to the surface of the product, it is according to the invention possible to spray one of or both the mutually facing surfaces of the textile and the product with an anti sticking agent such as mineral oil or silicone prior to the assembly thereof. It is also possible to apply a textile which per se has a low surface tension, i.e. one which is anti-sticking. In such case the textile can be rewound after the curing oven and optionally reused batch-wise, or it can have the form of an endless band loop around the curing oven lamellas.

It is also possible to apply more than one textile having any desired properties. By using more than one textile, each textile can be thinner and thus less stiff and by appropriate choice of textile materials it is possible to ensure that only the textile directly neighboring the rigid surface layer of the product is adhered thereto. In this way extremely thin textile coatings can be provided on the rigid surface layer allowing for virtually any surface properties desired depending on the selected textile while at the same time obtaining the advantageous effect of no marks from the curing oven, even if the second optionally reusable textile is also relatively thin.

The second drawback of the conventional curing oven relates to the use of hot air blown through the product for the purpose of setting any heat curable binding agent therein. As the bulk surface layer material according to the invention is relatively fine grained it might get displaced or even removed by the air streams through the product. However, according to the invention this problem can also be eliminated by applying a textile on top of the bulk surface layer, wherein the pore size is selected so as to substantially retain the material.

It is a significant advantage of the process according to the invention that it is possible to produce in a continuous online manner. It is furthermore an advantage thereof that the typically employed equipment in the art of mineral fibre insulating material production can be used with only very few modification, i.e. the addition of means for mixing and distributing the bulk surface layer material onto a more or less conventional mineral fibre web, preferably shortly prior to the curing thereof in the curing oven.

The term fibre as used herein designates any oblong structure or particle having a length at least 3 times its average diameter.

All mineral fibre insulating layers mentioned in the present application are preferably non-woven mineral fibre webs.

The term mineral fibre as used herein comprises all types of man-made mineral fibres, such as rock, glass or slag fibres, in particular fibres used in materials for the above mentioned purposes, and as filler in cement, plastics or other substances, or which are used as culture medium for plants. In particular rock fibres have proven suitable for the purposes of the present invention.

The term rock fibre as used herein designates fibres having a composition comprising generally around 34-62 % and preferably around 41-53 weight-% SiO₂, generally around 0.5-25 weight-% and preferably around 5-21 weight-% Al₂O₃, optionally around 0.5-15 weight-% and preferably around 2-9 weight-% total iron oxides, generally around 8-35 weight-% and preferably around 10-25 weight-% CaO, generally around 2.5-17 weight-% and preferably around 3-16 weight-% MgO, optionally around 0.05-1 weight-% and preferably around 0.06-0.6 weight-% MnO, generally around 0.4-2.5 weight-% and preferably around 0.5-2 weight-% K₂O, and further comprising Na₂O in an amount of less than around 5 weight-%, preferably less than around 4 weight-% and more preferably between around 1 and 3.5 weight-%, TiO₂ in an amount of more than around 0.2-2 weight-%. Preferably the rock fibres do not comprise BaO or Li₂O in any significant amount and the content of B₂O₃ is preferably less than 2%. Rock fibres typically have a glass transition temperature (Tg) above 700 °C, preferably above 730 °C and more preferably between around 760 and 870 °C. The density of rock fibres is typically above around 2.6 g/cm³ and preferably between around 2.7 and 3 g/cm³. The refractive index of rock fibres is typically above around 1.55 and preferably between around 1.6 and 1.8.

The term binding agent or binder as used herein comprises any material which is suited as binding agent in mineral fibre materials for the above products. Organic binding agents according to the invention in particular comprise phenol formaldehyde, phenol urea, acrylic-copolymer, resorsinol, furane and/or melamine resin, a furan resin as described in WO 99/38372, and are preferably irreversibly curable by heat setting or other means for setting binders known in the art.

All percentages are where nothing else is stated or evident meant as weight-% of the total weight of the composition in question. However, fibre length fractions are generally counted as the number of fibres falling within a certain category compared to the total number of counted fibres.

The fibre dimensions mentioned herein are measured using a Scanning Electron Microscope (SEM) and simple image analysis by the following procedure:

A sufficient and representative fibre sample is dispersed in demineralized water. The aliquot is filtered onto a Nucleopore® filter (0,8 µm). The filter is coated with gold (sputtered). The filter is mounted on a 25 mm aluminum pin stub. The magnification on which the diameter is measured depends on the length of the fibres, typically 1200-2000x. Fibres with at least one end in the field of view are measured. Fibres with only one end in the field of view are weighed with a factor of 1 and fibres with two ends in the field of view are weighed with a factor of 2. The length of the fibres is measured at the optimal magnification. The accuracy of the measurement depends on the number of measured fibres which can be selected as appropriate. The data are processed and the results are provided as a statistical normal distribution of fractions by the number of measured fibres.

The amounts of water addressed herein are meant as relating to essentially free water and/or more or less separately admixed water. Bound water in optional substances such as MgOH₂ or the like is not included.

The physical properties of the products mentioned herein are measured according to the standard EN 12430.

The invention will in the following be further illustrated by means of figures.
Fig. 1 illustrates a production line for a preferred embodiment of the invention.
Fig. 2 illustrates another production line for a preferred embodiment of the invention.
Fig. 3 illustrates a product according to the invention.

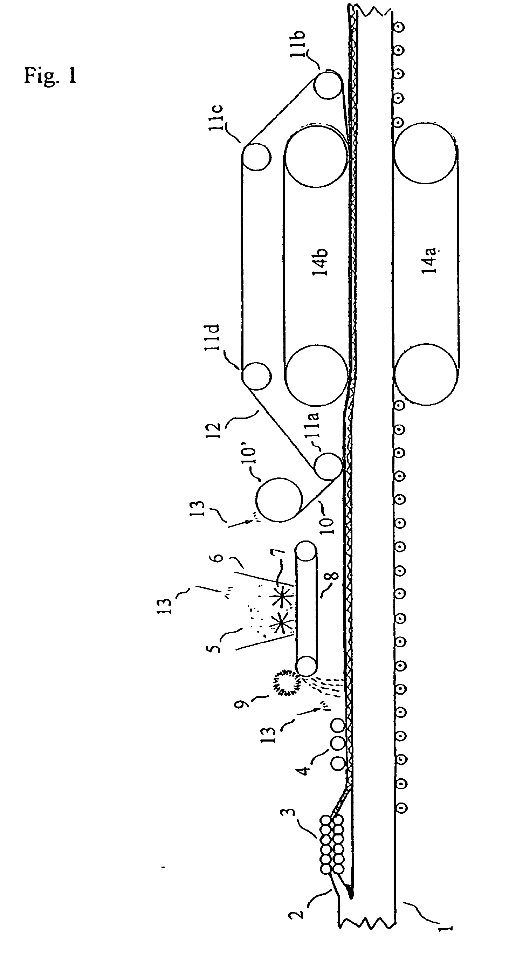

In fig. 1 the mineral fibre web 1 is divided horizontally and the divided of part 2 is compressed using a number of rollers 3, reapplied to the original web 1 and conditioned using rollers 4. A bulk surface layer material 5 as defined above is fed to box feeder 6 comprising dispenser wheels 7 which dispense the material 5 onto a moving conveyor band 8. From the band 8 the material 5 is distributed by means of a distribution brush 9 onto the top surface of the compressed layer 2. The layered product is then coated with a thin polyester fleece 10 from supply reel 10' and passed under roller 11a together with a glass fleece 12 around rollers 11a-d. An amount of an aqueous suspension of binding agent is supplied by means of nozzles 13. The binding agent is cured in a curing oven symbolized with conveyor bands 14a and 14b where hot air is sent through the product from the bottom to the top by means not shown. After curing the endless web 1, comprising a compressed layer 2, a rigid surface layer of the cured bulk surface layer material 5 and a thin polyester fleece surface coating 10 is cut to provide the final product according to the invention.

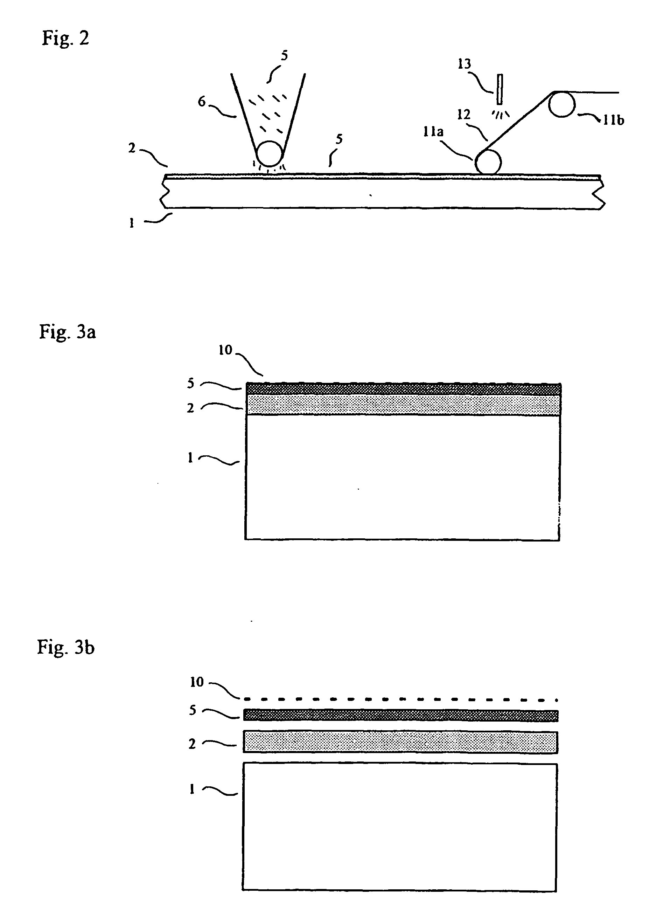

In fig. 2 the mineral fibre web 1 is provided with a compressed mineral fibre layer 2 and passed under feeder 6, which feeds the dry bulk surface layer material directly onto the top surface of the compressed insulating layer 2. The bulk surface layer material coated insulating web is passed under roller 11a together with glass fleece 12 which has been sprayed with an anti-sticking agent by means of nozzle 13 and transported to a curing oven not shown in which the binding agent in the insulating layers as well as the essentially dry bulk surface layer material is set. The glass fleece is easily removed from the rigid surface layer after curing of the binding agent, and the cured sandwiched structure is cut to form the product according to the invention having a soft insulating layer 1, a firm insulating layer 2 and a rigid surface layer 5.

Fig. 3a illustrates a side view of an embodiment of the product according to the invention wherein a low density insualting layer 1 is superposed by a high density insulating layer, which is superposed by the rigid surface layer 5. The rigid surface layer 5 is provided with a glass fleece 10.

Fig. 3a illustrates an exploded side view of the embodiment of the product according to the invention corresponding to fig. 3a.

The invention will in the following be further illustrated by means of examples.

### Example 1

A number of prior art mineral fibre boards were milled using a rod mill to a bulk density of 700-800 kg/m³. The milled material had a particle distribution where at least around 50 % by number of the material fell within the fraction having a length of around 10 µm or less and a diameter of around 3 µm or less, around 70 % by number fell within a fraction having a length of around 20 µm or less and a diameter of around 5 µm or less, and around 90 % number fell within a fraction having a length of around 70 µm or less and a diameter of around 8 µm or less.

To the milled material an amount of around 15 weight-% dry phenol formaldehyde based pulverous binder was admixed to form a bulk surface layer material.

The above defined material was distributed on the main surface of the high density layer of a conventional dual density mineral fibre board in the production process thereof and prior to curing of the binding agent within the board, said dual density board comprising a first mineral fibre insulating layer of 85 mm and having a density of 110 kg/m³, and a second mineral fibre insulating layer of 85 mm and having a density of 180 kg/m³. Immediately prior to the application of the bulk surface layer material the top surface of the mineral fibre insulating layer was conditioned by a roller to even the surface. The bulk surface layer material was distributed evenly in an amount of 2 kg/m², corresponding to a thickness of around 2-2.5 mm.

A glass fleece having a surface weight of around 60 g/m², and having an amount of 80 g/m² aqueous suspensed phenol based binder (in an 18.5 weight-% concentration) applied thereon was added on top of the bulk surface layer material, where after the sandwiched product was cured in a conventional curing oven to form a mineral fibre insulating product according to the invention, having a first and a second insulating layer, a rigid surface layer comprising a glass fleece covering.

After curing was the density of the rigid surface layer around 900 kg/m³, and due to the application of the glass fleece virtually no marks from the conveyor lamellas in the curing oven was formed on the surface of the product. Compared to an otherwise identical dual density board having no fleece covered rigid surface layer the product according to the invention has an E-modulus which is around three times higher.

The product according to the invention proved to be very suitable for roofing purposes and exhibited excellent properties for the application of roofing felts or foils thereon by means of welding or adhesion. A similar product comprising a first insulating layer of 130 kg/m³ and a second layer of 210 kg/m³ was produced, and exhibited essentially same advantageous properties.

### Example 2

A number of prior art mineral fibre boards were milled to a bulk density of around 700-800 kg/m³ as disclosed in example 1.

To the milled material an amount of around 10 weight-% dry phenol based pulverous binder was added as well as 10 weight-% of a 20 weight-% aqueous suspension of an identical phenol based binder (corresponding to a further 2 weight-% dry phenol binder) to form a bulk surface layer material comprising 12 weight-% binder.

The bulk surface layer material was applied to an uncured dual density mineral fibre web as disclosed in example 1, and two fleeces was applied on top of the bulk surface layer material. Firstly a polyester fleece of around 13 g/m² and having a PVAc based binder applied on the surface facing the bulk surface layer material was applied. Secondly a glass fleece as disclosed in example 1 was applied using no binder.

Subsequently the sandwiched product was cured in a conventional curing oven and the glass fleece was removed from the product to obtain a mineral fibre insulating product according to the invention, having a first and a second insulating layer, a rigid surface layer comprising a polyester fleece covering. The glass fleece was rewound and reused.

After curing was the density of the rigid surface layer around 900 kg/m³, and due to the temporary application of the glass fleece virtually no marks from the conveyor means in the curing oven was formed on the surface of the product.

The product of example 2 was compared to the product of example 1 and exhibited substantially the same excellent mechanical properties, although comprising 20 % less phenol binder.

A similar product comprising a first insulating layer of 130 kg/m³ and a second layer of 210 kg/m³ was produced, and exhibited same advantageous properties compared to the corresponding product of example 1.

Surprisingly, similar advantageous mechanical properties was also found in a product produced according to example 2, where only 5 weight-% dry phenol formaldehyde binder was used together with further 6 weight-% phenol formaldehyde binder suspension in a 50 weight-% aqueous concentration, i.e. a total of 8 weight-% binder. The latter product according to example 2 falls within the fire classification A2 according to CEN, which is highly advantageous.

### Example 3

Sand particles having a maximum grain size of 2 mm was admixed 10 weight-% pulverous phenolic binder to form the bulk surface layer material. A glass armor netting having a mask size of around 5 mm was laid out on a first bottom insulating layer of 130 kg/m³ and a second top layer of 210 kg/m³. On top of the netting an amount of 6.5 kg/m² of the bulk surface layer material was distributed evenly. The surface was covered with a glass fleece having a surface weight of 50 g/m² and cured in a curing oven. After curing the top glass fleece was removed and the product cut to provide the final insulating board according to the invention having a rigid surface layer. The product provided by example 3 proved to have very high mechanical strength and is i.a. very suitable as facade insulation e.g. for subsequent painting or plastering.

### Example 4

The product according to the invention obtained by the process of example 1 was compared to the insulating layer of example 1. without the rigid surface layer according to EN 12430. The total thickness of the product was 100 mm. The data is presented in table 1:

| Table 1 | Density of layers | F_{b}, Load at 5 mm deflection | δₚ, point load resistance | Eₚ, E-modulus |
|---|---|---|---|---|
| DD prior art insulation | 210 kg/m³ 130 kg/m³ | 563 N | 124 kPa | 2670 kPa |
| invention | 900 kg/m³ 210 kg/m³ 130 kg/m³ | 1187 N | 156 kPa | 6330 kPa |

As it is seen from the table, the rigid surface layer of 2 kg/m² (900 kg/m³) provided according to the invention results in extremely improved physical properties.

## Claims

1. A mineral fibre insulating product comprising a mineral fibre insulating base layer (1) and a rigid surface layer (2) wherein
the insulating base layer comprises mineral fibres and a bonding agent and has a mean density of 50 to 300kg/m³ and
the rigid surface layer comprises 40 to 95%, by weight of the rigid surface layer, mineral material bound together by 5 to 35%, by weight of the rigid surface layer, organic binder and has a mean density of at least 450kg/m³.

2. A product according to claim 1 in which the amount of organic binder in the rigid surface layer is at least 8% by weight of the layer and the total amount of mineral material in the layer is 50 to 92 % by weight of the layer.

3. A product according to any preceding claim in which the mineral fibre insulating base layer comprises insulating layers of differing densities and the insulating layer neighbouring the rigid surface layer has the higher density.

4. A product according to claim 3 in which the insulating base layer comprises a first insulating layer having a thickness of 25 to 300mm at a density of 50 to 150kg/m³ and the second insulating layer has a thickness of 10 to 40mm and a density of 150 to 300kg/m³.

5. A product according to any preceding claim in which the rigid layer is a layer obtainable by continuously and homogeneously flowing the mineral material and the binding agent on to the base layer and curing or hardening the binding agent.

6. A product according to any preceding claim in which the mineral material comprises material selected from grained mineral material having an average particle size from 50µm to 3mm, preferably 50µm to 2mm, and fibre material milled to an average fibre length of below 200µm.

7. A product according to any preceding claim in which the mineral material comprises fibre material which has been milled to an average fibre length of below 150*µ*m.

8. A product according to any preceding claim in which the rigid surface layer comprises 40 to 95%, by weight of the rigid layer, of milled mineral fibre material having an average length below 150µm.

9. A product according to any of claims 1 to 7 in which the rigid layer contains 40 to 95%, by weight of the layer, of quartz sand.

10. A product according to any preceding claim and having a porous woven or non-woven textile bonded to the outer surface of the rigid layer.

11. A product according to any preceding claim in which the rigid layer has a density of at least 600kg/m³.

12. A product according to any preceding claim in which the rigid layer has a density of at least 700kg/m³.

13. Use of a product according to any preceding claim for roofing or for covering a facade.

14. A process for making a product according to any of claims 1 to 11 comprising
providing an insulating base layer comprising mineral fibres and a binding agent and having a density of 50 to 300kg/m³,
providing bulk material for forming the rigid surface layer and comprising 40 to 95% by weight mineral material and 5 to 35% by weight organic binder,
distributing the bulk material on to the mineral fibre insulating base layer as a surface layer which will have a density of at least 450kg/m³ after curing the organic binder,
and curing the organic binder within the surface layer to form the rigid surface layer having a density of at least 450kg /m³.

15. A process according to claim 14 in which the bulk material is distributed on to the mineral fibre insulating base layer by continuously and homogeneously flowing bulk material comprising 40 to 95% mineral material and 5 to 35% organic binder on to the base layer.

16. A process according to claim 14 or claim 15 in which binding agent in the insulating base layer is cured substantially simultaneously with the binding agent in the rigid layer.

17. A process according to either of claims 14 or 15 in which the bulk material for forming the rigid layer comprises 40 to 92% mineral material and 1 to 30% by weight, preferably 1 to 10% by weight, water.

18. A process according to any of claims 14 to 17 in which the organic binder in the bulk material is provided partly as essentially dry powder and partly as aqueous suspension.

19. A process according to claim 18 in which the aqueous suspension is also distributed in the insulating base layer.

20. A process according to any of claims 15 to 19 in which the bulk material has a bulk density of at least 300kg/m³.

## Patentansprüche

1. Mineralfaser-Isolierprodukt, umfassend eine Mineralfaser-Isoliergrundschicht (1) und eine starre Oberflächenschicht (2), wobei
die lsoliergrundschicht Mineralfasern und ein Bindemittel umfasst und eine mittlere Dichte von 50 bis 300 kg/m³ aufweist und
die starre Oberflächenschicht 40 bis 95 %, bezogen auf das Gewicht der starren Oberflächenschicht, mineralisches Material umfasst, das mit 5 bis 35 %, bezogen auf das Gewicht der starren Oberflächenschicht, organischem Bindemittel untereinander verbunden ist, und eine mittlere Dichte von mindestens 450 kg/m³ aufweist.

2. Produkt nach Anspruch 1, in dem die Menge des organischen Bindemittels in der starren Oberflächenschicht mindestens 8 Gew.-% der Schicht ist und die Gesamtmenge von mineralischem Material in der Schicht 50 bis 92 Gew.-% der Schicht beträgt.

3. Produkt nach irgendeinem vorhergehenden Anspruch, in welchem die Mineralfaser-Isoliergrundschicht lsolierschichten von unterschiedlichen Dichten umfasst und die zur starren Oberflächenschicht benachbarte Isolierschicht die höhere Dichte aufweist.

4. Produkt nach Anspruch 3, in welchem die Isoliergrundschicht eine erste Isolierschicht mit einer Dicke von 25 bis 300 mm bei einer Dichte von 50 bis 150 kg/m³ umfasst und die zweite Isolierschicht eine Dicke von 10 bis 40 mm und eine Dichte von 150 bis 300 kg/m³ aufweist.

5. Produkt nach irgendeinem vorhergehenden Anspruch, in welchem die starre Schicht eine Schicht ist, die erhältlich ist durch kontinuierliches und homogenes Aufgeben des mineralischen Materials und des Bindemittels auf die Grundschicht und Vernetzen oder Härten des Bindemittels.

6. Produkt nach irgendeinem vorhergehenden Anspruch, in welchem das mineralische Material Material umfasst, das ausgewählt ist aus granuliertem mineralischem Material mit einer durchschnittlichen Teilchengröße von 50 µm bis 3 mm, bevorzugt 50 µm bis 2 mm, und Fasermaterial, das auf eine durchschnittliche Faserlänge von unter 200 µm gemahlen ist.

7. Produkt nach irgendeinem vorhergehenden Anspruch, in welchem das mineralische Material Fasermaterial umfasst, das auf eine durchschnittliche Faserlänge von unter 150 µm gemahlen ist.

8. Produkt nach irgendeinem vorhergehenden Anspruch, in welchem die starre Oberflächenschicht 40 bis 95 %, bezogen auf das Gewicht der starren Schicht, gemahlenes Mineralfasermaterial mit einer durchschnittlichen Länge unter 150 µm enthält.

9. Produkt nach irgendeinem der Ansprüche 1 bis 7, in welchem die starre Schicht 40 bis 95 %, bezogen auf das Gewicht der Schicht, Quarzsand enthält.

10. Produkt nach irgendeinem vorhergehenden Anspruch und mit einem porösen gewebten oder ungewebten Textil, das an der äußeren Oberfläche der starren Schicht gebunden ist.

11. Produkt nach irgendeinem vorhergehenden Anspruch, in welchem die starre Schicht eine Dichte von mindestens 600 kg/m³ aufweist.

12. Produkt nach irgendeinem vorhergehenden Anspruch, in welchem die starre Schicht eine Dichte von mindestens 700 kg/m³ aufweist.

13. Verwendung eines Produkts nach irgendeinem vorhergehenden Anspruch zur Bedachung oder zur Abdeckung einer Fassade.

14. Verfahren zur Herstellung eines Produkts nach irgendeinem der Ansprüche 1 bis 11, umfassend
das Bereitstellen einer Isoliergrundschicht, umfassend Mineralfasern und ein Bindemittel und mit einer Dichte von 50 bis 300 kg/m³,
das Bereitstellen von Schüttgut zur Bildung der starren Oberflächenschicht, das 40 bis 95 Gew.-% mineralisches Material und 5 bis 35 Gew.-% organisches Bindemittel umfasst,
das Verteilen des Schüttguts auf der Mineralfaser-Isoliergrundschicht als Oberflächenschicht, die nach Härten des organischen Bindemittels eine Dichte von mindestens 450 kg/m³ aufweist,
und das Härten des organischen Bindemittels in der Oberflächenschicht, um die starre Oberflächenschicht mit einer Dichte von mindestens 450 kg/m³ zu bilden.

15. Verfahren nach Anspruch 14, in welchem das Schüttgut auf die Mineralfaser-Isoliergrundschicht durch kontinuierliches und homogenes Aufgeben von Schüttgut, das 40 bis 95 % mineralisches Material und 5 bis 35 % organisches Bindemittel umfasst, auf die Grundschicht verteilt wird.

16. Verfahren nach Anspruch 14 oder Anspruch 15, in welchem das Bindemittel in der Isoliergrundschicht im wesentlichen gleichzeitig mit dem Bindemittel in der starren Schicht gehärtet wird.

17. Verfahren nach einem der Ansprüche 14 oder 15, in welchem das Schüttgut zur Bildung der starren Schicht 40 bis 92 % mineralisches Material und 1 bis 30 Gew.-%, bevorzugt 1 bis 10 Gew.-%, Wasser umfasst.

18. Verfahren nach irgendeinem der Ansprüche 14 bis 17, in welchem das organische Bindemittel in dem Schüttgut teilweise als im wesentlichen trockenes Pulver und teilweise als wässrige Suspension bereitgestellt wird.

19. Verfahren nach Anspruch 18, in welchem die wässrige Suspension auch in der Isoliergrundschicht verteilt ist.

20. Verfahren nach irgendeinem der Ansprüche 15 bis 19, in welchem das Schüttgut eine Schüttdichte von mindestens 300 kg/m³ aufweist.

## Revendications

1. Produit isolant en fibres minérales comprenant une couche de base isolante en fibres minérales (1) et une couche superficielle rigide (2) dans lequel
la couche de base isolante comprend des fibres minérales et un liant et présente une densité moyenne de 50 à 300 kg/m³ et
la couche superficielle rigide comprend 40 à 95 %, en poids de la couche superficielle rigide, de matériaux minéraux liés ensemble par 5 à 35 %, en poids de la couche superficielle rigide, de liant organique, et présente une densité moyenne d'au moins 450 kg/m³.

2. Produit selon la revendication 1, dans lequel la quantité de liant organique dans la couche superficielle rigide est d'au moins 8 % en poids de la couche, et la quantité totale de matériaux minéraux dans la couche est de 50 à 92 % en poids de la couche.

3. Produit selon l'une quelconque des revendications précédentes, dans lequel la couche de base isolante en fibres minérales comprend des couches d'isolation de différentes densités et la couche isolante adjacente à la couche superficielle rigide a la densité la plus élevée.

4. Produit selon la revendication 3, dans lequel la couche de base isolante comprend une première couche isolante ayant une épaisseur de 25 à 300 mm à une densité de 50 à 150 kg/m³ et la deuxième couche isolante a une épaisseur de 10 à 40 mm et une densité de 150 à 300 kg/m³.

5. Produit selon l'une quelconque des revendications précédentes, dans lequel la couche rigide est une couche qui peut être obtenue en faisant couler de manière continue et homogène les matériaux minéraux et le liant sur la couche de base et en faisant prendre ou durcir le liant.

6. Produit selon l'une quelconque des revendications précédentes, dans lequel les matériaux minéraux comprennent un matériau choisi parmi un matériau minéral granulé ayant une taille de particules allant de 50 µm à 3 mm, de préférence de 50 µm à 2 mm, et un matériau fibreux broyé à une longueur de fibre moyenne inférieure à 200 µm.

7. Produit selon l'une quelconque des revendications précédentes, dans lequel les matériaux minéraux comprennent un matériau fibreux qui a été broyé à une longueur de fibre moyenne inférieure à 150 µm.

8. Produit selon l'une quelconque des revendications précédentes, dans lequel la couche superficielle rigide comprend 40 à 95 %, en poids de la couche rigide, de matériaux en fibres minérales broyées ayant une longueur moyenne inférieure à 150 µm.

9. Produit selon l'une quelconque des revendications 1 à 7, dans lequel la couche rigide contient 40 à 95 %, en poids de la couche, de sable de quartz.

10. Produit selon l'une quelconque des revendications précédentes ayant un textile tissé ou non tissé poreux collé à la surface extérieure de la couche rigide.

11. Produit selon l'une quelconque des revendications précédentes, dans lequel la couche rigide a une densité d'au moins 600 kg/m³.

12. Produit selon l'une quelconque des revendications précédentes, dans lequel la couche rigide a une densité d'au moins 700 kg/m³.

13. Utilisation d'un produit selon l'une quelconque des revendications précédentes pour la toiture ou la couverture d'une façade.

14. Procédé de fabrication d'un produit selon l'une quelconque des revendications 1 à 11 comprenant les étapes consistant à
fournir une couche de base isolante comprenant des fibres minérales et un liant et ayant une densité de 50 à 300 kg/m3,
fournir un matériau en vrac pour former la couche superficielle rigide et comprenant 40 à 95 % en poids de matériaux minéraux et 5 à 35 % en poids de liant organique,
distribuer le matériau en vrac sur la couche de base isolante en fibres minérales pour former la couche superficielle qui aura une densité d'au moins 450 kg/m³ après la prise du liant organique,
et laisser prendre le liant organique dans la couche superficielle pour former la couche superficielle rigide ayant une densité d'au moins 450 kg/m³.

15. Procédé selon la revendication 14 dans lequel le matériau en vrac est distribué sur la couche de base isolante en fibres minérales par un écoulement continu et homogène du matériau en vrac comprenant 40 à 95 % en poids de matériaux minéraux et 5 à 35 % en poids de liant organique sur la couche de base.

16. Procédé selon la revendication 14 ou 15 dans lequel le liant dans la couche de base isolante prend sensiblement en même temps que le liant dans la couche rigide.

17. Procédé selon l'une quelconque des revendications 14 ou 15 dans lequel le matériau en vrac destiné à former la couche rigide comprend 40 à 92 % de matériaux minéraux et 1 à 30 % en poids, de préférence 1 à 10 % en poids d'eau.

18. Procédé selon l'une quelconque des revendications 14 à 17, dans lequel le liant organique dans le matériau en vrac est fourni en partie en tant que poudre essentiellement sèche et en partie en tant que suspension aqueuse.

19. Procédé selon la revendication 18, dans lequel la suspension aqueuse est également distribuée dans la couche de base isolante.

20. Procédé selon l'une quelconque des revendications 15 à 19, dans lequel le matériau en vrac a une densité en vrac d'au moins 300 kg/m³ .
